# EUROPEAN PATENT APPLICATION

(11) **EP 4 410 493 A1**
(43) Date of publication of application: **07.08.2024**
(21) Application number: 24155093.8
(22) Date of filing: 31.01.2024
(51) Int. Cl.: B25F 5/02

(54) **POWER TOOL INCLUDING INTERFACE FOR CONNECTING ACCESSORY ATTACHMENTS**

(30) Priority: 03.02.2023 US 202363483063 P
(71) Applicant: Techtronic Cordless GP, Anderson, SC 29621 (US)
(72) Inventor: POLITTE, Benjamin G., Anderson, 29621 (US); GROVES, Jeffrey, Anderson, 29621 (US); IRWIN, Connor S., Anderson, 29621 (US)
(74) Representative: Novagraaf Group

(57) **Abstract**

A power tool assembly includes a power tool. The power tool includes a housing, an electric motor supported within the housing, a battery pack coupled to the housing and configured to supply electrical current to the electric motor, an electronic control unit configured to selectively activate the electric motor with electrical current from the battery pack, and an interface on the housing. The interface includes a first plurality of electrical terminals that provide electrical current from the battery pack. The power tool assembly also includes an accessory attachment removably coupled to the interface. The accessory attachment includes a second plurality of electrical terminals that are electrically connectable with the first plurality of electrical terminals when the accessory attachment is coupled to the interface.

## Description

### CROSS-REFERENCE TO RELATED APPLICATIONS

This application claims priority to U.S. Provisional Patent Application No. 63/483,063, filed February 3, 2023, the entire content of which is incorporated herein by reference.

### FIELD OF THE DISCLOSURE

The present disclosure relates to power tools, and more particularly to power tool assemblies including accessory attachments.

### SUMMARY OF THE DISCLOSURE

The present disclosure provides, in one aspect, a power tool assembly including a power tool. The power tool includes a housing, an electric motor supported within the housing, a battery pack coupled to the housing and configured to supply electrical current to the electric motor, an electronic control unit configured to selectively activate the electric motor with electrical current from the battery pack, and an interface on the housing. The interface includes a first plurality of electrical terminals that provide electrical current from the battery pack. The power tool assembly also includes an accessory attachment removably coupled to the interface. The accessory attachment includes a second plurality of electrical terminals that are electrically connectable with the first plurality of electrical terminals when the accessory attachment is coupled to the interface.

In some aspects, the disclosure described herein relates to a power tool assembly, wherein the accessory attachment is configured to be slid onto the interface.

In some aspects, the disclosure described herein relates to a power tool assembly, wherein the interface is positioned proximal to the battery pack.

In some aspects, the disclosure described herein relates to a power tool assembly, wherein the interface includes a slot, wherein the slot includes a first end and a second end.

In some aspects, the disclosure described herein relates to a power tool assembly, wherein the accessory attachment includes a rail, wherein the slot is configured to receive the rail.

In some aspects, the disclosure described herein relates to a power tool assembly, wherein the slot defines a slot length measured from the first end to the second end, wherein the rail defines a rail length measured from a first rail end to a second rail end, and wherein the slot length and the rail length are equal.

In some aspects, the disclosure described herein relates to a power tool assembly, wherein the second plurality of electrical terminals are disposed on the rail.

In some aspects, the disclosure described herein relates to a power tool assembly, wherein the second plurality of electrical terminals are spring loaded.

In some aspects, the disclosure described herein relates to a power tool assembly, wherein the accessory attachment includes a switch configured to detect a user input and to output a signal, wherein the electronic control unit is in communication with the switch, wherein the electronic control unit is configured to receive the signal from the switch, and wherein the electronic control unit is configured to limit the electrical current supplied to the electric motor in response to the signal from the switch.

In some aspects, the disclosure described herein relates to a power tool assembly, wherein the accessory attachment includes a light source configured to illuminate an area and wherein the battery pack is configured to supply electrical current to the light source.

In some aspects, the disclosure described herein relates to a power tool assembly, wherein the accessory attachment includes a distance sensor.

In some aspects, the disclosure described herein relates to a power tool assembly, wherein the accessory attachment includes electrical components, the electrical components are electronically connected to the second plurality of electrical terminals and to the electronic control unit.

In some aspects, the disclosure described herein relates to a power tool assembly, wherein the electrical components of the accessory attachment are configured as a stud finder.

The present disclosure provides, in another aspect, a power tool assembly including a power tool. The power tool includes a housing, an electric motor supported within the housing, a battery pack coupled to the housing and configured to supply electrical current to the electric motor, an electronic control unit configured to selectively activate the electric motor with electrical current from the battery pack, and an interface on the housing. The interface includes one of a slot or a rail. The power tool assembly also includes an accessory attachment configured to be removably coupled to the interface. The accessory attachment includes the other of the slot or the rail. The rail is received within the slot to secure the accessory attachment to the interface, thereby supporting the accessory attachment on the power tool.

In some aspects, the disclosure described herein relates to a power tool assembly, wherein the interface includes a first plurality of electrical terminals that provide electrical current from the battery pack and wherein the accessory attachment includes a second plurality of electrical terminals that are electrically connectable with the first plurality of electrical terminals when the accessory attachment is coupled to the interface.

In some aspects, the disclosure described herein relates to a power tool assembly, wherein the accessory attachment includes non-electric components.

In some aspects, the disclosure described herein relates to a power tool assembly, wherein the non-electric components include a magnet.

The present disclosure provides, in one aspect, a power tool including a housing, an electric motor supported within the housing, a battery pack coupled to the housing and configured to supply electrical current to the electric motor, an electronic control unit configured to selectively activate the electric motor with electrical current from the battery pack, and an interface on the housing. The interface includes a first plurality of electrical terminals that provide electrical current from the battery pack. The interface of the power tool assembly is configured to be removable coupled to an accessory attachment. The accessory attachment includes a second plurality of electrical terminals that are electrically connectable with the first plurality of electrical terminals when the accessory attachment is coupled to the interface.

The present disclosure further provides a method of controlling a power tool assembly. The method includes receiving, with a housing of a power tool, a battery pack configured to supply electrical current to an electric motor of the power tool, the electric motor supported within the housing, and the housing including an interface that includes a first plurality of electrical terminals. The method includes receiving an accessory attachment with the interface on the housing. The method includes connecting the first plurality of electrical terminals with a second plurality of electrical terminals disposed on the accessory attachment. The method includes controlling, with an electronic control unit of the power tool, a supply of the electrical current from the battery pack to the electric motor. The method includes supplying, with the first plurality of electrical terminals, electrical current from the battery pack to the interface.

Other features and aspects of the disclosure will become apparent by consideration of the following detailed description and accompanying drawings.

### BRIEF DESCRIPTION OF THE DRAWINGS

FIG. 1 is a perspective view of a power tool including an interface for connecting accessory attachments.
FIG. 2 is an enlarged perspective view of the power tool and the interface of FIG. 1.
FIG. 3 is a side view of the power tool and the interface of FIG. 1.
FIG. 4 is a perspective view of a power tool assembly including the power tool of FIG. 1 with an accessory attachment coupled to the interface.
FIG. 5 is a perspective view of an accessory attachment for use with the power tool of FIG. 1.
FIG. 6 is a perspective view of the accessory attachment of FIG. 5 coupled to the interface of the power tool of FIG. 1.
FIG. 7 is a perspective view of an accessory attachment for use with the power tool of FIG. 1.
FIG. 8 is a perspective view of the accessory attachment of FIG. 7 coupled to the interface of the power tool of FIG. 1.
FIG. 9 is a perspective view of an accessory attachment for use with the power tool of FIG. 1.
FIG. 10 is a perspective view of the accessory attachment of FIG. 9 coupled to the interface of the power tool of FIG. 1.
FIG. 11 is a perspective view of another power tool assembly including an accessory attachment coupled to a power tool.
FIG. 12 is an exploded view of the power tool assembly of FIG. 11.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways.

### DETAILED DESCRIPTION

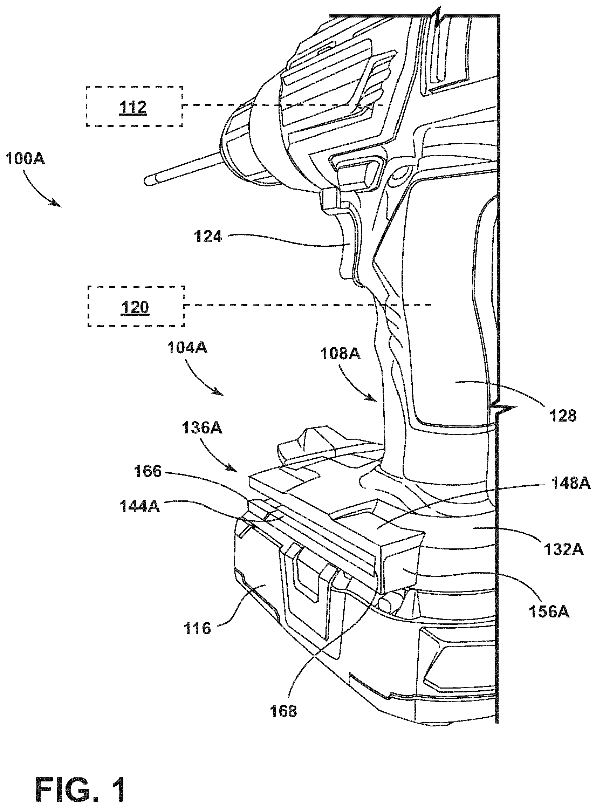

FIG. 1 illustrates a power tool assembly 100A including a power tool 104A (e.g., a drill driver). The power tool 104A includes a housing 108A supporting an electric motor 112 and a battery pack 116 coupled to the housing 108A. The battery pack 116 is configured to supply electrical current to the electric motor 112 of the power tool 104A. The power tool 104A includes an electronic control unit 120 that is configured to selectively activate the electric motor 112 with electrical current from the battery pack 116. The power tool 104A includes an actuator (e.g., a trigger 124) configured to receive a user input. The trigger 124 is configured to detect the user input and output an electrical signal to the electronic control unit 120. The electronic control unit 120 is configured to receive the signal from the trigger 124 and to selectively activate the electric motor 112 with electrical current from the battery pack 116. The housing 108A includes a handle portion 128 and a base 132A to which the battery pack 116 is attached.

In some embodiments, the battery pack 116 may be an 18-volt rechargeable power tool battery pack 116. The battery pack 116 may include multiple battery cells having, for example, a lithium (Li), lithium-ion (Li-ion), or other lithium-based chemistry. For example, the battery cells may have a chemistry of lithium-cobalt (Li-Co), lithium-manganese (Li-Mn) spinel, or Li-Mn nickel. In such embodiments, each battery cell may have a nominal voltage of about, for example, 3.6V, 4.0V, or 4.2V. In other embodiments, the battery cells may have a nickelcadmium, nickel-metal hydride, or lead acid battery chemistry. In further embodiments, the battery pack 116 may include fewer or more battery cells, and/or the battery cells may have a different nominal voltage. In yet another embodiment, the battery pack 116 may be a dedicated battery housed (partially or entirely) within the power tool 104A. The battery pack 116 may also be configured for use with other cordless power tools, such as drills, screwdrivers, grinders, wrenches, and saws.

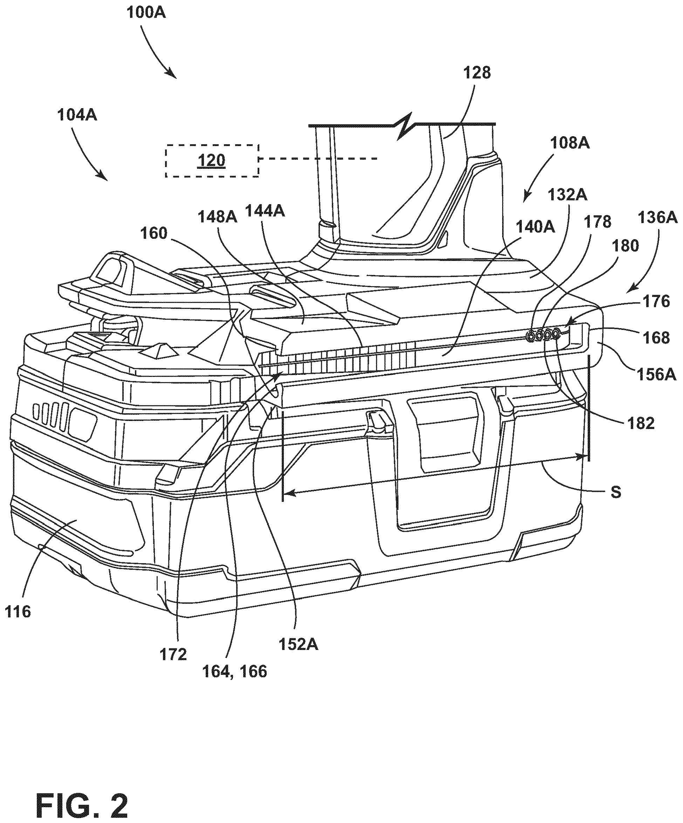

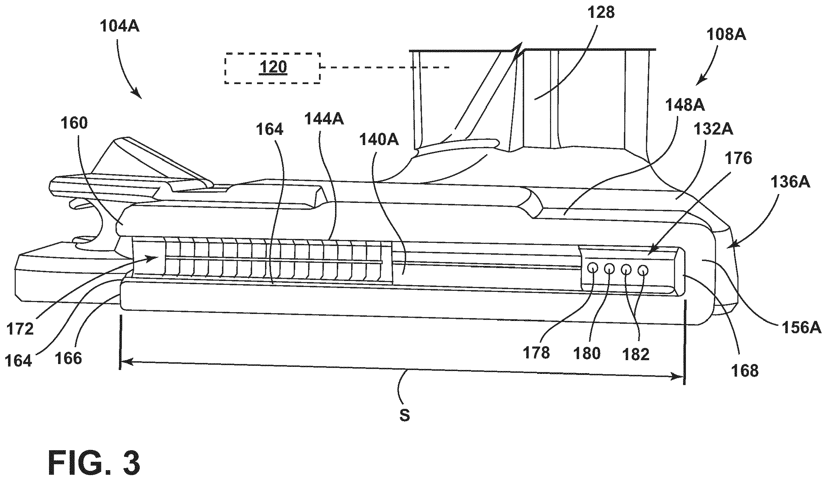

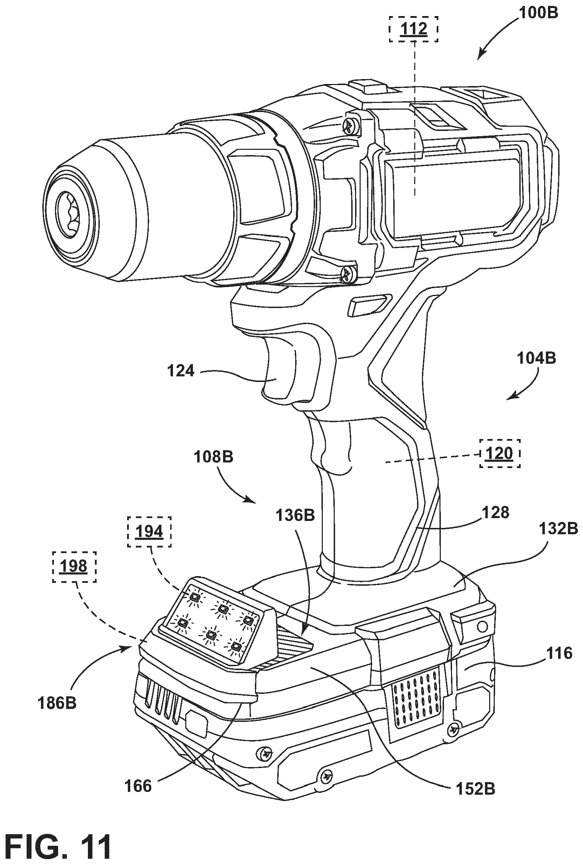

With reference to FIGS. 1-3, the power tool 104A includes an interface 136A located on an outer side wall 140A of the base 132A and extends in a front-rear direction of the base 132A (and thus the power tool 104A). The interface 136A is also located above the battery pack 116 when it is attached to the power tool 104A. In other words, the interface 136A is positioned proximal to the battery pack 116. In other embodiments, the interface 136A may be located on a front wall or a rear wall of the base 132A (see FIG. 11). In other embodiments, the interface 136A can be located anywhere on the housing 108A. The interface includes an accessory slot 144A collectively defined by the outer side wall 140A, a first wall 148A, a second wall 152A, a third wall 156A. The first wall 148A extends from the outer side wall 140A and includes a hook 160 that is perpendicular to the first wall 148A and extends toward the second wall 152A. The second wall 152A extends from the outer side wall 140A and includes a hook 164 that is perpendicular to the second wall 152A and extends toward the first wall 148A. The third wall 156A extends from the outer side wall 140A and between the first and the second wall 148A, 152A. In the illustrated embodiment, the interface 136A is integrated with the base 132A of the housing 108A. The slot 144A includes an open first end 166 and a closed second end 168 opposite the first end 166. An opening for the slot 144A is at the first end 166. The slot 144A defines a slot length S that is measured from the first end 166 to the second end 168 (FIGS. 2 and 3). The outer side wall 140A includes a tapered portion 172 that decreases a depth of the slot 144A over an initial segment of the slot length S.

With continued reference to FIGS. 2 and 3, the interface 136A includes a first plurality of electrical terminals 176 that provide electrical current from the battery pack 116. Specifically, the first plurality of electrical terminals 176 include a power terminal 178 and a ground terminal 180 that provide electrical current from the battery pack 116. The first plurality of electrical terminals 176 also include a pair of communication terminals 182 that enable electronic connection to the electronic control unit 120. In one or more embodiments, the interface 136A includes the communication terminals 182 that are connected to the electronic control unit 120 for communication.

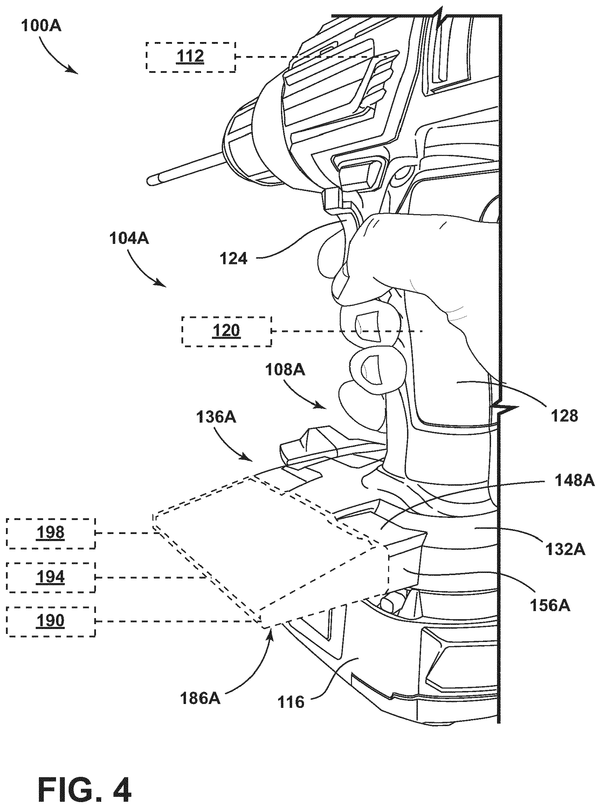

FIG. 4 illustrates the power tool assembly 100A including an accessory attachment 186A, according to an embodiment of the disclosure. The accessory attachment 186A is selectively coupled to the power tool 104A at the interface 136A. In some embodiments, the accessory attachment 186A includes a rail with a corresponding geometry to fit in the slot 144A, such that the rail is slidably received within the slot 144A. The accessory attachment 186A optionally includes a second plurality of electrical terminals 190 that electrically connect with first plurality of electrical terminals 176. The accessory attachment 186A is optionally supplied electrical current from the battery pack 116 though the first and the second plurality of electrical terminals 176, 190. The accessory attachment 186A optionally includes electrical components 194 that are electronically connected to the second plurality of electrical terminals 190. The electrical components 194 are optionally electronically connected to the electronic control unit 120. The accessory attachment 186A optionally includes non-electric components 198. Specific examples of the optional electrical components 194 and non-electric components 198 are discussed in detail below.

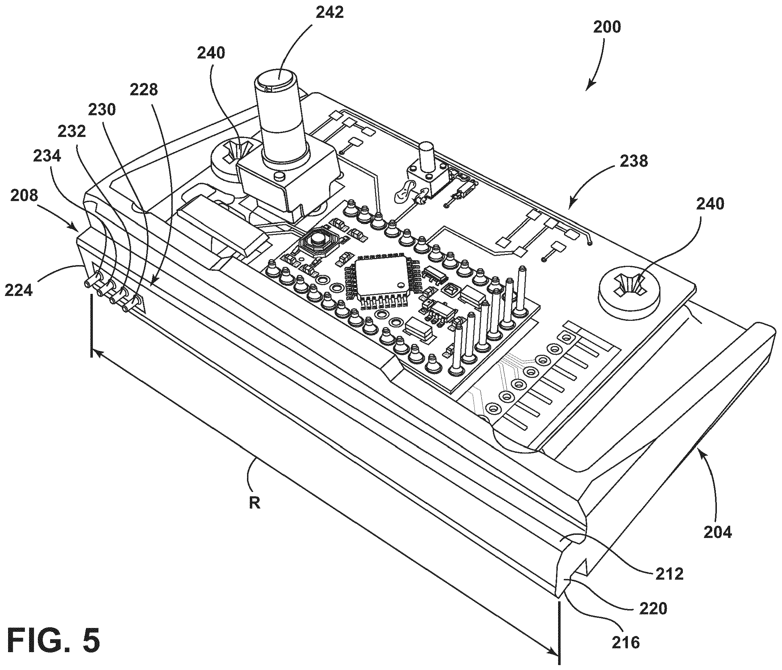

FIG. 5 illustrates an accessory attachment 200, according to another embodiment of the present disclosure. The accessory attachment 200 is alternately connectable to the interface 136A on the power tool 104A. The accessory attachment 200 includes a housing 204 and a rail 208 extending therefrom. The rail 208 has a complimentary shape to the slot 144A. Specifically, the rail 208 includes a first lip 212 that is configured to engage the hook 160 and second lip 216 that is configured to engage the second hook 164 to facilitate sliding movement therebetween. The rail 208 includes a first rail end 220 and a second rail end 224. The rail 208 defines a rail length R measured from the first rail end 220 to the second rail end 224. A second plurality of electrical terminals 228 are disposed on the rail 208 and include a power terminal 230, a ground terminal 232, and a pair of communication terminals 234. The second plurality of electrical terminals 228 are spring loaded. The accessory attachment 200 includes a printed circuit board (PCB 238) that is coupled to the housing 204 with fasteners 240. The PCB 238 is electronically coupled to the second plurality of electrical terminals 228. The PCB 238 includes a switch (i.e., a dial 242) that is configured to detect a user input and output an electrical signal.

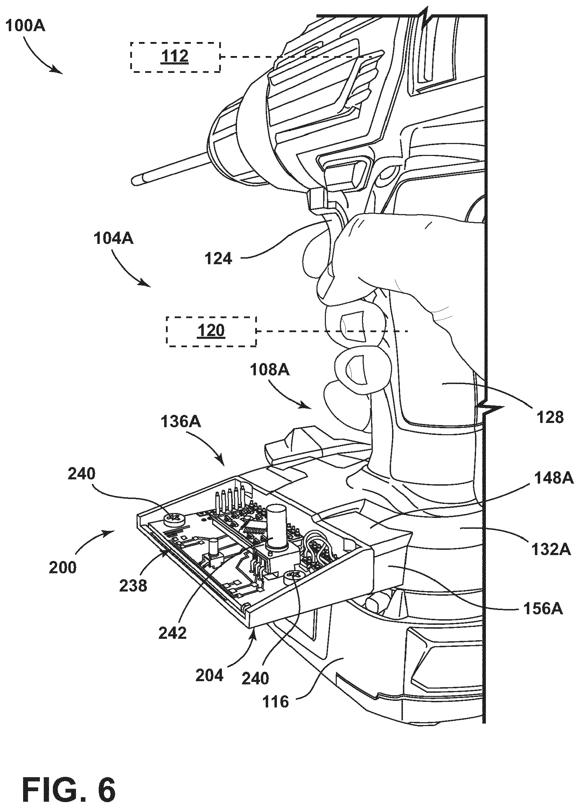

FIG. 6 illustrates the accessory attachment 200 mounted to the interface 136A. The rail 208 is slidably engaged with the slot 144A, such that the accessory attachment 200 is supported by the base 132A. In other words, the rail 208 is received within the slot 144A to secure the accessory attachment 200 to the interface 136A. During insertion of the accessory attachment 200, the second rail end 224 is inserted into the opening proximal to the first end 166 of the slot 144A. During insertion, the second plurality of electrical terminals 228 may recede into the rail 208 when contacting the outer side wall 140A. Upon complete insertion, the first and the second rail ends 220, 224 are proximal to the first and the second ends 166, 168 of the slot 144A, respectively. The slot lengths S and the rail length R are equal. When the accessory attachment 200 is coupled to the interface 136A, the second plurality of electrical terminals 228 are electrically connected with the first plurality of electrical terminals 176, permitting the battery pack 116 to supply the accessory attachment 200 with electrical current through the power terminals 178, 230. Additionally, when the accessory attachment 200 is coupled to the interface 136A, the electronic control unit 120 is electronically connected to the accessory attachment 200 by the pair of communication terminals 234 such that the electronic control unit 120 may receive an electrical signal corresponding with movement of the dial 242.

In the illustrated embodiment, the dial 242 is configured detect a desired maximum speed of the electric motor 112. As background, the speed of the electric motor 112 is dependent on the amount of electrical current supplied to the electric motor 112 by the electronic control unit 120. As described earlier, the electronic control unit 120 supplies electrical current to the electric motor 112 in response to the user depressing the trigger 124. Normally, the user can reach maximum speed of the electric motor 112 by fully depressing the trigger 124 and the electronic control unit 120 can supply maximum electrical current (i.e., 0-100% PWM) to the electric motor 112. However, the dial 242 can "remap" the amount of electrical current supplied to the electric motor 112 by the electronic control unit 120 when the trigger 124 is depressed. For example, the user can rotate the dial 242 a first direction to reduce the maximum speed of the electric motor 112. The electronic control unit 120 detects this input from the dial 242 and limits the supply of maximum current to the electric motor 112 to a value less than 100% PWM (e.g., may limit maximum current 0-20% PWM) when the user fully depresses the trigger 124. In other words, the dial 242 provide an input to the electronic control unit 120 to limit the amount of electrical current supplied to the electric motor 112. The electronic control unit 120 includes memory to store the remapping of the maximum speed. Thereafter, the accessory attachment 200 can be removed from the power tool 104A and the new maximum speed will remain programmed in the electronic control unit 120. The user may readjust the desired maximum speed of the electric motor 112 by reattaching the accessory attachment 200 and readjusting the dial 242 as described above.

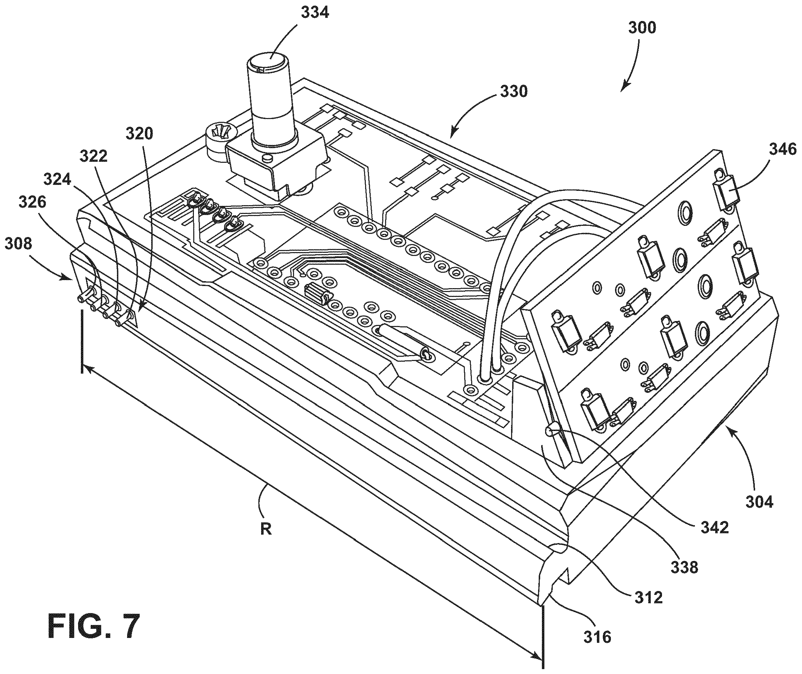

FIG. 7 illustrates another accessory attachment 300 that is alternately connectable to the interface 136A on the power tool 104A. Similar to the accessory attachment 200, the accessory attachment 300 includes a housing 304 with a rail 308 having a first lip 312 and a second lip 316 that is configured to facilitate sliding movement therebetween. The accessory attachment 300 includes the second plurality of electrical terminals 320 including a power terminal 322, a ground terminal 324, and a pair of communication terminals 326. The accessory attachment 300 includes a printed circuit board (PCB 330) that is coupled to the housing with fasteners. The PCB 330 is electronically coupled to the second plurality of electrical terminals 320. The PCB 330 includes a switch (i.e., a dial 334) that is configured to detect a user input and output a signal. The housing includes a pair of arms 338 including a hinge 342. The accessory attachment 300 includes a light source 346 (e.g., a light emitting diode or "LED") that is coupled to the hinge 342. In the illustrated embodiment, there are six LEDs 346. The LEDs 346 are pivotable about the hinge 342 by the user and is placed toward a front of the tool. LEDs 346 are electrically connected to the PCB 330 to receive electrical current therefrom and emit light when activated.

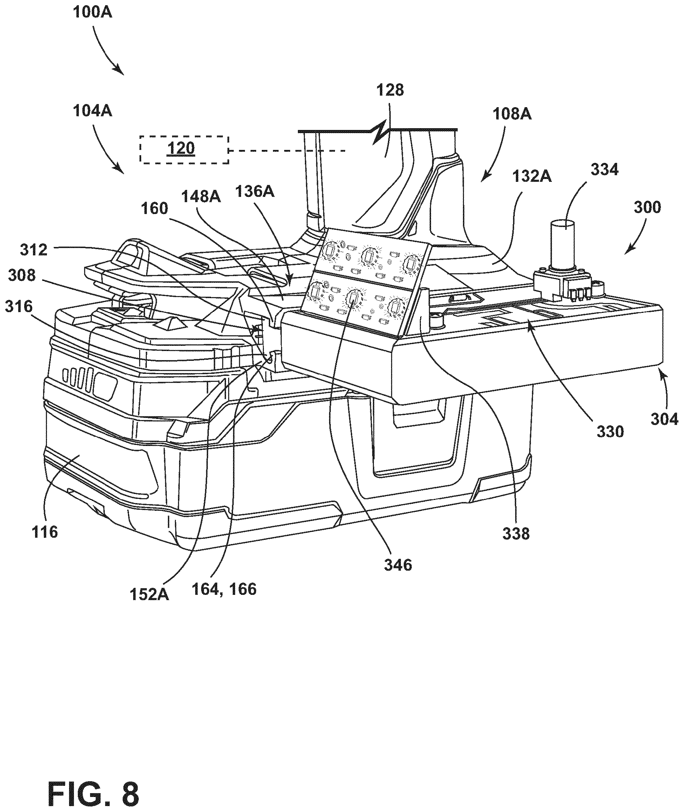

FIG. 8 illustrates the accessory attachment 300 mounted to the interface 136A. The rail 308 is slidably engaged with the slot 144A, such that the accessory attachment 300 is supported by the base 132A. When the accessory attachment 300 is coupled to the interface 136A, the second plurality of electrical terminals 320 are electrically connected with the first plurality of electrical terminals 176 such that the battery pack 116 supplies the accessory attachment 300 with electrical current through the power terminals 178, 322. The LEDs 346 receive electrical current supplied from the battery pack 116. In the illustrated embodiment, the dial 334 is configured to activate the LEDs 346. Specifically, the user adjusts the dial 334 to activate the LEDs 346 with electrical current from the battery pack 116. When activated, the LEDs 346 illuminates a work area. In the illustrated embodiment, the dial 334 is configured to adjust a brightness of the LEDs 346. The brightness of the LEDs 346 is dependent on the amount of electrical current supplied to the LEDs 346. The PCB 330 may increase the electrical current supplied to the LEDs 346 from the battery pack 116 depending on adjustment of the dial 334. In some embodiments of the power tool 104A having an onboard work light, adjustment of the dial 334 also changes the brightness of the onboard work light in addition to the brightness of the LEDs 346 on the accessory attachment 300.

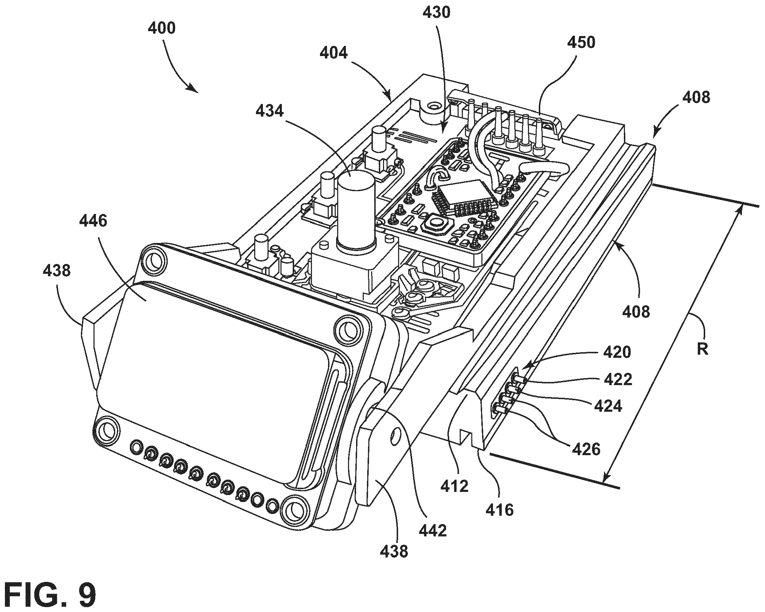

FIG. 9 illustrates another accessory attachment 400 that is alternately connectable to the interface 136A on the power tool 104A. Similar to the accessory attachments 200, 300, the accessory attachment 400 includes a housing 404 with a rail 408 having a first lip 412 and a second lip 416 that is configured to facilitate sliding movement therebetween. The accessory attachment 400 includes the second plurality of electrical terminals 420 including a power terminal 422, a ground terminal 424, and a pair of communication terminals 426. The accessory attachment 400 includes a printed circuit board (PCB 430) that is coupled to the housing with fasteners. The PCB 430 is electronically coupled to the second plurality of electrical terminals 420. The PCB 430 includes a switch (i.e., a dial 434) that is configured to detect a user input and output an electrical signal. The housing includes a pair of arms 438 and a hinge 442. The accessory attachment 400 includes a screen 446 pivotally coupled to the hinge 442 to adjust the viewing angle by the user. The screen 446 is electrically connected to the PCB 430. The accessory attachment 400 also includes a time-of-flight laser sensor 450 that is electrically connected to the PCB 430.

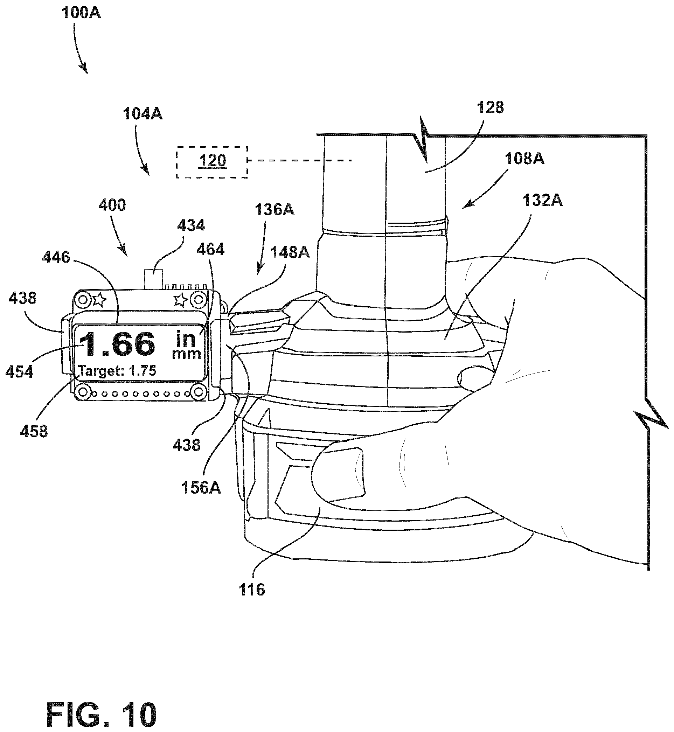

FIG. 10 illustrates the accessory attachment 400 mounted to the interface 136A. The rail 408 is slidably engaged with the slot 144A, such that the accessory attachment 400 is supported by the base 132A. When the accessory attachment 400 is coupled to the interface 136A, the second plurality of electrical terminals 420 are electrically connected with the first plurality of electrical terminals 176 such that the battery pack 116 supplies the accessory attachment 400 with electrical current through the power terminals 178, 422. The time-of-flight laser sensor 450 and the screen 446 receive electrical current from the battery pack 116. The time-of-flight laser sensor 450 is configured to detect a work surface and output an electrical signal to the PCB 430, which then calculates a distance between the power tool 104A and the work surface. The calculated distance is displayed on the screen 446 in a first section 454 of the screen 446. The accessory attachment 400 is a distance sensor. The dial 434 is adjusted to set a minimum or maximum distance from the workpiece in which the power tool 104A is operable (i.e., a target distance). Specifically, the user may adjust the dial 434 to vary the target distance, which is displayed in a second section 458 of the screen 446. The dial 434 outputs or sends an electrical signal to the PCB 430 to set the target distance. Upon reaching the target distance, the electronic control unit 120 can deactivate the electric motor 112, thereby preventing activation of the electric motor 112 and stopping the work operation with the power tool 104A. In some embodiments, the target distance may be used in an instance where the user wants to drill a fastener to a specific depth with the power tool 104A. The screen 446 displays a unit of measurement in a third section 462 of the screen 446. In some embodiments, the user may adjust the unit of measurement using the dial 434.

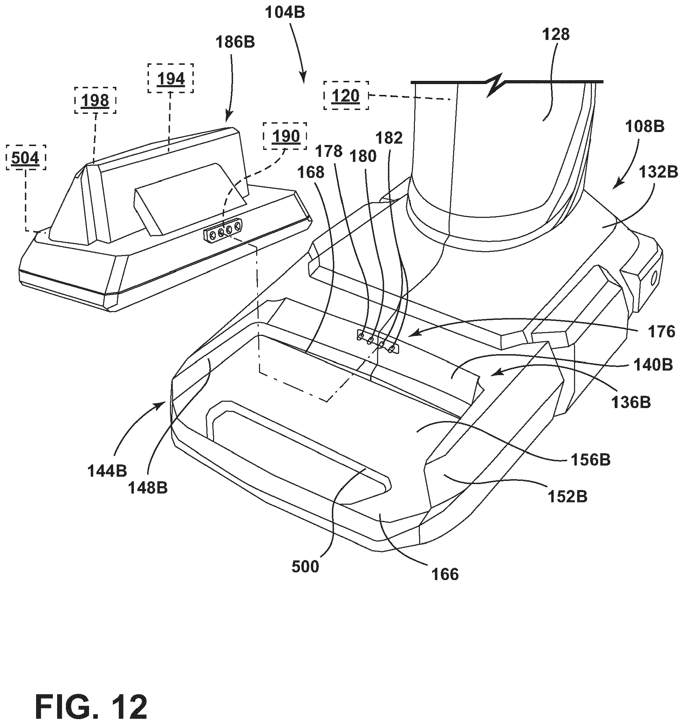

FIGS. 11 and 12 illustrate another embodiment of a power tool assembly 100B including a power tool 104B having a housing 108B. The housing 108B supports the electric motor 112 and the battery pack 116 coupled to the housing 108B. The power tool 104B includes the electronic control unit 120. The housing 108B includes the handle portion 128 and a base 132B to which the battery pack 116 is attached. In contrast to the housing 108A of the power tool 104A, the housing 108B includes an interface 136B located on an outer side wall 140B of the base 132B that extends in a left-right direction of the base 132B (and thus the power tool 104B). FIG. 11 illustrates an accessory attachment 186B coupled to the interface 136B.

With reference to FIG. 12, the interface 136B includes an accessory slot 144B collectively defined by the outer side wall 140B, a first wall 148B, a second wall 152B, a third wall 156B. The first wall 148B extends from the outer side wall 140B and the third wall 156B. The second wall 152B extends from the outer side wall 140B and the third wall 156B. The first wall 148B and the second wall 152B are perpendicular from the outer side wall 140B and the third wall 156B. The first wall 148B and the second wall 152B are parallel to one another. The third wall 156B extends from the outer side wall 140B and between the first wall 148B and the second wall 152B. In the illustrated embodiment, the interface 136B is integrated with the base 132B of the housing 108B. The slot 144B includes an open first end 166 and a closed second end 168 opposite the first end 166. An opening for the slot 144B is at the first end 166. The third wall 156B includes an aperture 500. With continued reference to FIG. 12, the interface 136B includes the first plurality of electrical terminals 176 that provide electrical current from the battery pack 116. Specifically, the first plurality of electrical terminals 176 include a power terminal 178 and a ground terminal 180 that provide electrical current from the battery pack 116. The first plurality of electrical terminals 176 also include a pair of communication terminals 182 that enable electronic connection to the electronic control unit 120. In one or more embodiments, the interface 136B includes the communication terminals 182 that are connected to the electronic control unit 120 for communication. The first plurality of electrical terminals 176 are disposed on the outer side wall 140B.

With continued reference to FIG. 12, the accessory attachment 186B is selectively coupled to the power tool 104B at the interface 136B. In the illustrated embodiment, the accessory attachment 186B includes a rail with a corresponding geometry to fit in the slot 144B, such that the rail is slidably received within the slot 144B. Specifically, the rail of the accessory attachment 186B is configured to be received by the first and the second walls 148B, 152B. In the illustrated embodiment, the accessory attachment 186B includes a latch 504 with a corresponding geometry to the aperture 500 of the third wall 156B. In some embodiments, the latch 504 is spring-loaded so that the protrusion 504 is recessed into the accessory attachment 186B when the accessory attachment 186B is slid into the slot 144B. When the accessory attachment 186B is completely received in the slot 144B, the latch 504 is configured to extend into the aperture 500, thereby locking the accessory attachment 186B to the power tool 104B. In the illustrated embodiment, the accessory attachment 186B optionally includes a second plurality of electrical terminals 190 that electrically connect with the first plurality of electrical terminals 176. The accessory attachment 186B is optionally supplied electrical current from the battery pack 116 though the first and the second plurality of electrical terminals 176, 190. The accessory attachment 186 optionally includes electrical components 194 that are electronically connected to the second plurality of electrical terminals 190. In the illustrated embodiment, the electrical components 194 include a light source (e.g., a light emitting diode or "LED"). The electrical components 194 are optionally electronically connected to the electronic control unit 120. The accessory attachment 186B optionally includes non-electric components 198. Specific examples of the optional electrical components 194 and non-electric components 198 are discussed in detail below.

The electrical components 194 are compatible with the accessory attachments 186A, 186B (e.g., accessory attachment 186) of each of the respective power tools 104A, 104B (e.g., power tool 104).

In some embodiments, the electrical components 194 of the accessory attachment 186 (FIGS. 4 and 11) are configured to provide a tool lockout mode. As discussed above, the electrical components 194 are powered by the battery pack 116. The user may activate the tool lockout with the electrical components 194. The electrical components 194 detect a user input and output a signal to the electronic control unit 120. The electronic control unit 120 receives the signal and does not supply the electric motor 112 with electrical current from the battery pack 116 (i.e., a lockout mode). In the lockout mode, the power tool 104 is incapable of operation. In an unlocked state, the power tool 104 is capable of operation. The electronic control unit 120 includes memory to store the lockout mode. As such, the accessory attachment 186 can be removed from the power tool 104 and the lockout mode will remain programmed in the electronic control unit 120. The user may reattach the accessory attachment 186 and deactivate the lockout mode with the electrical components.

In some embodiments, the electrical components 194 of the accessory attachment 186 are configured to provide media control. The electrical components 194 are powered by the battery pack 116. The electrical components 194 are configured to connect to speakers and/or a media player, and provide the ability to play, pause, rewind, skip, and control the volume of the connected media.

In some embodiments, the electrical components 194 of the accessory attachment 186 are configured to be in communication with other power tools. The electrical components 194 are powered by the battery pack 116. In some embodiments, the electrical components 194 may communicate with a vacuum. The electrical components 194 are configured to provide a signal to turn the vacuum on or off. In some embodiments, the signals sent to the vacuum by the electrical components 194 are controlled by the electronic control unit 120. For instance, the electronic control unit 120 may instruct the electrical components 194 to turn the vacuum on or off depending on if the electric motor 112 is active.

In some embodiments, the electrical components 194 of the accessory attachment 186 are configured as a stud finder.

In some embodiments, the electrical components 194 of the accessory attachment 186 are configured to configured to communicate data of the tool and the tool's surroundings to an external source. The electrical components 194 are powered by the battery pack 116. Examples of an external source could include a display or a computer. An example of tool data is a measurement of the battery life of the tool. An example of data for the tool's surroundings is the distance of the tool from a workpiece.

In some embodiments, the electrical components 194 of the accessory attachment 186 are configured as a location tracker using GPS, Bluetooth, and/or near-field communication (NFC).

In some embodiments, the non-electric components 198 of the accessory attachment 186 are configured as a bubble level. In some embodiments, the non-electric components 198 of the accessory attachment 186 are configured as a magnet configured to receive ferromagnetic material. Specifically, the magnet is in the form of a magnetic parts tray. In some embodiments, the non-electric components 198 of the accessory attachment 186 are configured as a belt clip receiver. In some embodiments, the non-electric components 198 of the accessory attachment 186 are configured as carpenter's pencil storage. In some embodiments, the non-electric components 198 of the accessory attachment 186 are configured as a bit-bar attachment to hold bit bars.

Although the disclosure has been described in detail with reference to certain preferred embodiments, variations and modifications exist within the scope and spirit of one or more independent aspects of the disclosure as described.

Various features of the disclosure are set forth in the following claims.

### REPRESENTATIVE FEATURES

Representative features are set out in the following clauses, which stand alone or may be combined, in any combination, with one or more features disclosed in the text and/or drawings of the specification.
1. A power tool assembly comprising:
   a power tool including
      a housing,
      an electric motor supported within the housing,
      a battery pack coupled to the housing and configured to supply electrical current to the electric motor,
      an electronic control unit configured to selectively activate the electric motor with electrical current from the battery pack, and
      an interface on the housing, the interface including a first plurality of electrical terminals that provide electrical current from the battery pack; and
   an accessory attachment removably coupled to the interface, the accessory attachment including a second plurality of electrical terminals that are electrically connectable with the first plurality of electrical terminals when the accessory attachment is coupled to the interface.
2. The power tool assembly of claim 1, wherein the accessory attachment is configured to be slid onto the interface.
3. The power tool assembly of claim 1, wherein the interface is positioned proximal to the battery pack.
4. The power tool assembly of claim 1, wherein the interface includes a slot, wherein the slot includes a first end and a second end.
5. The power tool assembly of claim 4, wherein the accessory attachment includes a rail, wherein the slot is configured to receive the rail.
6. The power tool assembly of claim 5, wherein the slot defines a slot length measured from the first end to the second end, wherein the rail defines a rail length measured from a first rail end to a second rail end, and wherein the slot length and the rail length are equal.
7. The power tool assembly of claim 5, wherein the second plurality of electrical terminals are disposed on the rail.
8. The power tool assembly of claim 1, wherein the second plurality of electrical terminals are spring loaded.
9. The power tool assembly of claim 6, wherein the accessory attachment includes a switch configured to detect a user input and to output a signal, wherein the electronic control unit is in communication with the switch, wherein the electronic control unit is configured to receive the signal from the switch, and wherein the electronic control unit is configured to limit the electrical current supplied to the electric motor in response to the signal from the switch.
10. The power tool assembly of claim 1, wherein the accessory attachment includes a light source configured to illuminate an area and wherein the battery pack is configured to supply electrical current to the light source.
11. The power tool assembly of claim 1, wherein the accessory attachment includes a distance sensor.
12. The power tool assembly of claim 1, wherein the accessory attachment includes electrical components, the electrical components are electronically connected to the second plurality of electrical terminals, and to the electronic control unit.
13. The power tool assembly of claim 12, wherein the electrical components of the accessory attachment are configured as a stud finder.
14. A power tool assembly comprising:
   a power tool including
      a housing,
      an electric motor supported within the housing,
      a battery pack coupled to the housing and configured to supply electrical current to the electric motor,
      an electronic control unit configured to selectively activate the electric motor with electrical current from the battery pack, and
      an interface on the housing, the interface including one of a slot or a rail; and
   an accessory attachment configured to be removably coupled to the interface, the accessory attachment including the other of the slot or the rail,
   wherein the rail is received within the slot to secure the accessory attachment to the interface, thereby supporting the accessory attachment on the power tool.
15. The power tool assembly of claim 14, wherein the interface includes a first plurality of electrical terminals that provide electrical current from the battery pack and wherein the accessory attachment includes a second plurality of electrical terminals that are electrically connectable with the first plurality of electrical terminals when the accessory attachment is coupled to the interface.
16. The power tool assembly of claim 14, wherein the accessory attachment includes non-electric components.
17. The power tool assembly of claim 16, wherein the non-electric components include a magnet.
18. A power tool comprising:
   a housing;
   an electric motor supported within the housing;
   a battery pack coupled to the housing and configured to supply electrical current to the electric motor;
   an electronic control unit configured to selectively activate the electric motor with electrical current from the battery pack; and
   an interface on the housing, the interface including a first plurality of electrical terminals that provide electrical current from the battery pack,
   wherein the interface is configured to be removably coupled to an accessory attachment, the accessory attachment including a second plurality of electrical terminals that are electrically connectable with the first plurality of electrical terminals when the accessory attachment is coupled to the interface.
19. The power tool of claim 18, wherein the interface is configured to slidably receive the accessory attachment onto the interface.
20. The power tool of claim 18, wherein the interface is positioned proximal to the battery pack.
21. A method of controlling a power tool assembly, the method comprising:
   receiving, with a housing of a power tool, a battery pack configured to supply electrical current to an electric motor of the power tool, the electric motor supported within the housing, and the housing including an interface that includes a first plurality of electrical terminals;
   receiving an accessory attachment with the interface on the housing;
   connecting the first plurality of electrical terminals with a second plurality of electrical terminals disposed on the accessory attachment;
   controlling, with an electronic control unit of the power tool, a supply of the electrical current from the battery pack to the electric motor; and
   supplying, with the first plurality of electrical terminals, electrical current from the battery pack to the interface.
22. The method of claim 21, further comprising:
   sending a signal in response to detecting a user input via a switch of the accessory attachment;
   receiving the signal with the electronic control unit; and
   limiting, with the electronic control unit, the electrical current from the battery pack to the electric motor in response to the signal.
23. The method of claim 21, further comprising:
   sending a signal in response to detecting a user input via a switch of the accessory attachment;
   receiving the signal with the electronic control unit; and
   preventing, with the electronic control unit, the electrical current from the battery pack to the electric motor in response to the signal.

## Claims

1. A power tool assembly comprising:
a power tool including
a housing,
an electric motor supported within the housing,
a battery pack coupled to the housing and configured to supply electrical current to the electric motor,
an electronic control unit configured to selectively activate the electric motor with electrical current from the battery pack, and
an interface on the housing, the interface including a first plurality of electrical terminals that provide electrical current from the battery pack; and
an accessory attachment removably coupled to the interface, the accessory attachment including a second plurality of electrical terminals that are electrically connectable with the first plurality of electrical terminals when the accessory attachment is coupled to the interface.

2. The power tool assembly of claim 1, wherein the accessory attachment is configured to be slid onto the interface.

3. The power tool assembly of claim 1, wherein the interface is positioned proximal to the battery pack.

4. The power tool assembly of claim 1, wherein the interface includes a slot, wherein the slot includes a first end and a second end.

5. The power tool assembly of claim 4, wherein the accessory attachment includes a rail, wherein the slot is configured to receive the rail.

6. The power tool assembly of claim 5, wherein the slot defines a slot length measured from the first end to the second end, wherein the rail defines a rail length measured from a first rail end to a second rail end, and wherein the slot length and the rail length are equal.

7. The power tool assembly of claim 5, wherein the second plurality of electrical terminals are disposed on the rail.

8. The power tool assembly of claim 1, wherein the second plurality of electrical terminals are spring loaded.

9. The power tool assembly of claim 6, wherein the accessory attachment includes a switch configured to detect a user input and to output a signal, wherein the electronic control unit is in communication with the switch, wherein the electronic control unit is configured to receive the signal from the switch, and wherein the electronic control unit is configured to limit the electrical current supplied to the electric motor in response to the signal from the switch.

10. The power tool assembly of claim 1, wherein the accessory attachment includes a light source configured to illuminate an area and wherein the battery pack is configured to supply electrical current to the light source.

11. The power tool assembly of claim 1, wherein the accessory attachment includes a distance sensor.

12. The power tool assembly of claim 1, wherein the accessory attachment includes electrical components, the electrical components are electronically connected to the second plurality of electrical terminals, and to the electronic control unit.

13. The power tool assembly of claim 12, wherein the electrical components of the accessory attachment are configured as a stud finder.

14. A power tool assembly comprising:
a power tool including
a housing,
an electric motor supported within the housing,
a battery pack coupled to the housing and configured to supply electrical current to the electric motor,
an electronic control unit configured to selectively activate the electric motor with electrical current from the battery pack, and
an interface on the housing, the interface including one of a slot or a rail; and
an accessory attachment configured to be removably coupled to the interface, the accessory attachment including the other of the slot or the rail,
wherein the rail is received within the slot to secure the accessory attachment to the interface, thereby supporting the accessory attachment on the power tool.

15. A power tool comprising:
a housing;
an electric motor supported within the housing;
a battery pack coupled to the housing and configured to supply electrical current to the electric motor;
an electronic control unit configured to selectively activate the electric motor with electrical current from the battery pack; and
an interface on the housing, the interface including a first plurality of electrical terminals that provide electrical current from the battery pack,
wherein the interface is configured to be removably coupled to an accessory attachment, the accessory attachment including a second plurality of electrical terminals that are electrically connectable with the first plurality of electrical terminals when the accessory attachment is coupled to the interface.
